# EUROPÄISCHE PATENTANMELDUNG

(11) **EP 3 358 102 A1**
(43) Veröffentlichungstag der Anmeldung: **08.08.2018**
(21) Anmeldenummer: 18155468.4
(22) Anmeldetag: 07.02.2018
(51) Int. Cl.: E04F 15/024, F16B 43/00

(54) **HÖHENVERSTELLBARES STELZLAGER ZUM VERLEGEN VON BODENBELAGELEMENTEN**

(30) Priorität: 07.02.2017 DE 102017102369
(71) Anmelder: LISI Automotive KKP GmbH & Co.KG, 97638 Mellrichstadt (DE)
(72) Erfinder: Borowsky, Patrick, 98617 Meiningen (DE)
(74) Vertreter: RGTH

(57) **Zusammenfassung**

Um ein höhenverstellbares Stelzlager (100) zum Verlegen und zur Lagerung eines Bodenbelages aus mehreren Bodenbelagelementen möglichst flexibel auszugestalten, wobei das Stelzlager (100) mindestens ein Unterteil (10), ein auf das Unterteil (10) aufgestecktes Mittelteil (11) und ein auf das Mittelteil (11) aufgestecktes Oberteil (12) aufweist, wird vorgeschlagen, Unterteil (10), Mittelteil (11) und Oberteil (12) derart auszubilden und zueinander anzuordnen, dass bei Drehbewegung des Mittelteils (11) eine Veränderung eines ersten Abstands zwischen dem Unterteil (10) und dem Mittelteil (11) sowie auch eine Veränderung des zweiten Abstands zwischen Mittelteil (11) und dem Oberteil (12) bewirkt wird.

## Beschreibung

### Technisches Gebiet

Die Erfindung betrifft ein höhenverstellbares Stelzlager zum Verlegen und zur Lagerung eines Bodenbelags aus mehreren Bodenbelagelementen, wobei das Stelzlager mindestens ein Unterteil, ein auf das Unterteil aufgestecktes Mittelteil und ein auf das Mittelteil aufgestecktes Oberteil aufweist. Das Unterteil, das Mittelteil und das Oberteil sind dabei derart ausgebildet, dass durch eine Drehbewegung des Mittelteils die Höhe des Stelzlagers verändert wird.

Bodenbeläge, welche aus mehreren Bodenbelagelementen, beispielsweise Platten, Dielen oder Bohlen, bestehen, können auf unterschiedlichstem Untergrund verlegt werden. Dabei kommen unterschiedliche Verlegetechniken zum Einsatz. Beispielsweise ist die Verlegung von Bodenbelagelementen auf Stelzlagern bekannt. Eine derartige Verlegetechnik ist besonders flexibel und kann relativ kostengünstig umgesetzt werden.

Bei der Verwendung von Stelzlagern werden diese auf einem Untergrund angeordnet und auf den Stelzlagern die einzelnen Bodenbelagelemente gelagert. Hierfür sind unterschiedliche Ausführungsformen von Stelzlagern bekannt. Beispielsweise können Stelzlager derart ausgebildet sein, dass sie, bei plattenförmigen Bodenbelagelementen jeweils an deren Ecken sitzen und so gleichzeitig die Ecken von vier zusammenstoßenden Platten halten. Für andersförmige Bodenbelagelemente können entsprechend angepasste Stelzlager vorgesehen sein.

Des Weiteren sind höhenverstellbare Stelzlager zum Ausgleich von Unebenheiten des Untergrundes bekannt. Üblicherweise weisen derartige höhenverstellbare Stelzlager zwei in etwa kreisscheibenförmige Teile auf, wobei das Stelzlager durch Verdrehen der beiden Teile um deren gemeinsame Hochachse zueinander höhenverstellbar ausgebildet ist. Das untere Teil ruht dabei auf dem Untergrund, wobei auf die Oberseite des oberen Teils das Bodenbelagelement beziehungsweise die Bodenbelagelemente aufgesetzt werden. Ferner ist zum Ausgleich von Unebenheiten des Untergrundes bekannt, elastische Elemente, wie beispielsweise Schaumgummi, Filzmatten oder ähnliches zusätzlich unter den einzelnen Stelzlagern anzuordnen.

### Stand der Technik

Aus den Druckschriften US 2003/0070372 A1 und US 2011/0185675 A1 sind Stelzlager für plattenförmige Bodenbelagelemente bekannt. Die Stelzlager sind zum Ausgleich von Unebenheiten oder unterschiedlichen Neigungen des Untergrundes höhenverstellbar ausgebildet.

Aus der DE 37 09 017 A1 ist ein höhenverstellbares Stützelement zum Abstützen von Bodenplatten für Doppelböden bekannt. Das Stützelement weist einen Abstützteil und einen Auflageteil auf, wobei beide Teile um eine gemeinsame Achse relativ zueinander verdrehbar sind und über Schrägflächen beziehungsweise Gewindegänge miteinander in Eingriff stehen. Zum Ausgleich von Unebenheiten des Untergrundes, auf dem das Abstützteil befestigt wird, wird auf dem Auflageteil über eine Gelenkrichtung ein Auflageteller angeordnet, dessen Auflagefläche relativ zum Auflageteil verstellbar ist.

In der AT 51 66 86 A1 wird eine Haltevorrichtung für Belagsplatten, die einen Bodenbelag bilden, beschrieben. Die Haltevorrichtung ist höhenverstellbar ausgebildet und besteht aus einem auf dem Untergrund ruhenden Unterteil und einem dazu in Richtung einer Hochachse verstellbar angeordneten Oberteil, auf dem die Belagplatten ruhen. Um Unebenheiten des Untergrundes auszugleichen, ist vorgesehen, dass die Unterseite des Unterteils oder eines an ihm angeordneten Auflageteils eine, vom Unterteil aus gesehen, doppelt positive Krümmung aufweist. Dabei kann die Position der Haltevorrichtung durch Verschwenken dieser verändert werden.

### Darstellung der Erfindung: Aufgabe, Lösung, Vorteile

Aufgabe der vorliegenden Erfindung ist es, ein höhenverstellbares Stelzlager zum Verlegen und zur Lagerung eines Bodenbelags aus mehreren Bodenbelagelementen möglichst flexibel und für die Verwendung von unterschiedlichen Bodenbelagelementen auszubilden.

Erfindungsgemäß wird hierfür ein höhenverstellbares Stelzlager zum Verlegen und zur Lagerung eines Bodenbelags aus mehreren Bodenbelagelementen vorgeschlagen, wobei das Stelzlager mindestens ein Unterteil, ein auf das Unterteil aufgestecktes Mittelteil und ein auf das Mittelteil aufgestecktes Oberteil aufweist. Das Unterteil, das Mittelteil und das Oberteil sind dabei derart ausgebildet, dass durch eine Drehbewegung des Mittelteils eine Höhe des Stelzlagers verändert wird.

Des Weiteren sind die drei Teile erfindungsgemäß derart ausgebildet und zueinander angeordnet, dass die Drehbewegung des Mittelteils eine Veränderung eines ersten Abstands zwischen dem Unterteil und dem Mittelteil sowie aber auch eine Veränderung eines zweiten Abstandes zwischen dem Mittelteil und dem Oberteil bewirkt.

Der Bodenbelag, welcher mittels des erfindungsgemäßen Stelzlagers verlegt werden kann, ist demnach modular aufgebaut und besteht aus mehreren Bodenbelagelementen. Beispielsweise kann damit ein Terrassenboden oder ein Balkonboden ausgebildet werden. Die einzelnen Bodenbelagelemente, beispielsweise Platten, Dielen oder Bohlen, können aus jedem geeigneten Material, beispielsweise Stein, Beton oder Holz, ausgebildet sein und werden nebeneinander beziehungsweise in der Horizontalen auf den auf dem Untergrund angeordneten beziehungsweise verteilten Stelzlagern angeordnet.

Unter einem Stelzlager ist im Sinne der vorliegenden Erfindung ein Plattenlager beziehungsweise eine Auflagevorrichtung für Bodenbelagelemente zu verstehen. Das Stelzlager wird auf einem Untergrund, beispielsweise Beton, Estrich oder Split, angeordnet. Auf die Oberseite der Stelzlager werden dann die Bodenbelagelemente aufgesetzt und gelagert. Die Stelzlager dienen somit zum einen als Distanzelemente, wodurch ein doppelter Boden entsteht. Zum anderen dienen die Stelzlager aber auch zum Ausgleich von Unebenheiten und/oder Höhenunterschieden. Für plattenförmige Bodenbelagelemente kann das Stelzlager beispielsweise zum Aufsetzen von vier Platten mit jeweils einer Ecke dienen. Hierfür weist das Stelzlager eine im Wesentlichen runde Form auf.

Das Stelzlager wird mit dessen Unterteil auf den Untergrund gesetzt. Auf die Oberseite des Oberteils werden die Bodenbelagelemente aufgelegt. Hierfür kann die Oberseite als Strukturoberfläche ausgebildet sein, damit ein Verrutschen der Bodenbelagelemente vermieden wird. Das Mittelteil ist zwischen dem Unterteil und dem Oberteil angeordnet. Durch Drehen beziehungsweise durch Drehbewegung des Mittelteils wird der Abstand beziehungsweise die Distanz zwischen Unterteil und Mittelteil sowie auch der Abstand beziehungsweise die Distanz zwischen Mittelteil und Oberteil verändert. Das Mittelteil wird somit in Höhenrichtung beziehungsweise in axialer Richtung relativ zum Unterteil und relativ zum Oberteil bewegt. Hierfür steht das Mittelteil in einer Wirkverbindung mit dem Oberteil und dem Mittelteil.

Das erfindungsgemäße höhenverstellbare Stelzlager kann somit bereits fertig montiert ausgeliefert werden. Hierunter ist zu verstehen, dass alle drei Teile bereits aufeinander gesteckt sein können. Ein und derselbe Stelzlagertyp kann für den gesamten Aufbau des Bodenbelages verwendet werden, wobei nur ein sehr geringer Planungsaufwand für den Installateur erforderlich ist. Um Unebenheiten beziehungsweise Höhenunterschiede des Untergrundes auszugleichen, muss lediglich am Mittelteil gedreht werden. Somit ist eine sehr einfache Anpassung möglich. Dadurch, dass beim Drehen des Mittelteils sowohl der Abstand zwischen Unterteil und Mittelteil sowie aber auch gleichzeitig der Abstand zwischen Mittelteil und Oberteil verändert wird, kann ein besonders großer Höhenausgleich mit einem einzigen Stelzlager erreicht werden. Beispielsweise kann bei einer maximalen Drehung des Mittelteils um weniger als eine volle Umdrehung, beispielsweise 300°, ein Höhenausgleich von bis zu 30 mm erreicht werden.

Bevorzugterweise sind das Unterteil und das Oberteil zueinander drehgesichert ausgebildet. Somit ist bevorzugterweise ausschließlich das Mittelteil drehbar gelagert. Eine Drehbewegung des Mittelteils bewirkt somit eine translatorische Bewegung des Mittelteils sowie des Oberteils in Höhenrichtung beziehungsweise Axialrichtung. Dabei werden das Oberteil genauso wie das Unterteil bevorzugterweise nicht mit gedreht. Somit kann auch nach dem Aufsetzen von Bodenbelagelementen in einfacher Weise die Höhe verändert werden, da sich das Oberteil nicht mit dreht.

Ferner ist bevorzugterweise vorgesehen, dass das Mittelteil mehrere, zum Oberteil ausgerichtete und konzentrisch zueinander angeordnete Windungen oder eine zum Oberteil ausgerichtete spiralförmig angeordnete Windung aufweist. Jede Windung weist einen Bodenabschnitt mit einer linearen oder nicht linearen Steigung auf. Unter konzentrischen Windungen sind im Wesentlichen ringförmig zueinander angeordnete Windungen zu verstehen. Im inneren Abschnitt weisen die Windungen somit einen kleineren Durchmesser auf als im äußeren Abschnitt. Alternativ zu den konzentrisch angeordneten Windungen kann eine spiralförmig von innen nach außen laufende Windung am Mittelteil vorgesehen sein. Eine Windung ist im Wesentlichen als nutförmige Aufnahme für ein Gegenstück, nämlich ein Auflagemittel des Oberteils, ausgebildet. Die einzelnen Windungen können umfänglich unterbrochen oder durchgehend ausgebildet sein. Die Steigung des Bodenabschnitts ist in Umfangsrichtung zu verstehen. Somit verändert sich in Umfangsrichtung die Tiefe einer Windung. Die Tiefe einer jeweiligen Windung erstreckt sich im Wesentlichen in Höhenrichtung beziehungsweise axialer Richtung des Stelzlagers.

Das Oberteil weist bevorzugterweise mehrere zum Mittelteil ausgerichtete und konzentrisch zueinander angeordnete Auflagemittel oder ein spiralförmig angeordnetes Auflagemittel auf. Jedes Auflagemittel ist in einer Windung des Mittelteils angeordnet und liegt zumindest bereichsweise auf einem Bodenabschnitt innerhalb einer Windung auf. Die Auflagemittel können stegartig ausgebildet und von der Unterseite des Oberteils in Höhenrichtung beziehungsweise axialer Richtung abstehen. Die Auflagemittel am Oberteil sind somit als Gegenstück zu den Windungen des Mittelteils ausgebildet. Die Auflagemittel weisen in Umfangsrichtung eine variierende Höhe entsprechend der Steigung des jeweiligen Bodenabschnitts auf. Durch Drehen des Mittelteils werden die Auflagemittel relativ zur Windung innerhalb dieser verschoben. Effektiv wird nur die Windung gedreht, da das Oberteil drehgesichert ist. Somit gleitet der Bodenabschnitt mit dessen Steigung beim Drehen des Mittelteils entlang der Auflagemittel. Dabei wird der Abstand zwischen Oberteil und Mittelteil verstellt. Bevorzugterweise können die Bodenabschnitte beziehungsweise die Steigungen in den einzelnen Bodenabschnitten in zueinander benachbarten Windungen des Mittelteils in Umfangsrichtung versetzt zueinander, beispielsweise um 120° versetzt, angeordnet sein. Des Weiteren ist bevorzugterweise vorgesehen, dass das Oberteil zwei bis vier, ganz besonders bevorzugterweise drei konzentrisch zueinander angeordnete Auflagemittelt aufweist.

Des Weiteren ist bevorzugterweise vorgesehen, dass das Mittelteil mehrere zum Unterteil ausgerichtete und konzentrisch zueinander angeordnete Windungen oder eine spiralförmig angeordnete Windung aufweist. Jede der Windungen weist einen Bodenabschnitt mit einer teilweise linearen oder teilweise nicht linearen Steigung auf. Die zum Unterteil hin ausgerichteten Windungen sind analog zu den Windungen, welche zum Oberteil ausgerichtet sind, ausgebildet. Bevorzugterweise sind Windungen, welche zum Unterteil beziehungsweise Oberteil ausgerichtet sind, abwechselnd in konzentrischen Ringen zueinander angeordnet. Beispielsweise kann die Windung, welche am weitesten im Inneren liegt, zum Unterteil ausgerichtet sein. Die nächste um diese Windung herum angeordnete Windung könnte dann zum Oberteil ausgerichtet sein. Auch könnte die Anordnung in umgekehrter Reihenfolge vorgesehen sein.

Das Unterteil weist, wie auch das Oberteil, bevorzugterweise mehrere zum Mittelteil ausgerichtete und konzentrisch zueinander angeordnete Auflagemittel oder ein spiralförmig angeordnetes Auflagemittel auf. Jedes Auflagemittel ist innerhalb einer Windung angeordnet und liegt zumindest bereichsweise auf einem Bodenabschnitt innerhalb der jeweiligen Windung auf. Die Auflagemittel des Unterteils sind analog zu den Auflagemitteln des Oberteils ausgebildet. Ferner sind besonders bevorzugterweise am Unterteil zwischen zwei und vier, ganz besonders bevorzugterweise drei, konzentrisch zueinander angeordnete Auflagemittel angeordnet. Die Auflagemittel des Unterteils korrespondieren mit den Windungen des Mittelteils, welche zum Unterteil ausgerichtet sind. Durch das Drehen des Mittelteils werden die Auflagemittel relativ zur Windung innerhalb dieser verschoben. Effektiv wird nur die Windung gedreht, da das Unterteil, wie auch das Oberteil, bevorzugterweise zueinander drehgesichert ist. Dadurch gleiten beim Drehen des Mittelteils die Bodenabschnitte mit der jeweiligen Steigung entlang der Auflagemittel des Oberteils und des Unterteils. Dadurch wird beim Drehen des Mittelteils gleichzeitig der Abstand zwischen Mittelteil und Unterteil sowie auch der Abstand zwischen Mittelteil und Oberteil variiert beziehungsweise verändert.

In Umfangrichtung variiert die Höhe der Auflagemittel des Oberteils und des Unterteils geradlinig ansteigend entsprechend der jeweiligen korrespondierenden Windung beziehungsweise entsprechend der Steigung des jeweiligen Bodenabschnitts innerhalb der korrespondierenden Windung. Die Höhe der Auflagemittel ist dabei in Höhenrichtung beziehungsweise Axialrichtung des Stelzlagers ausgerichtet. Ferner ist bevorzugterweise vorgesehen, dass in Radialrichtung versetzt zu den Auflagemitteln des Oberteils die Auflagemittel des Unterteils angeordnet sind.

Bevorzugterweise weisen die einzelnen Bodenabschnitte in den jeweiligen Windungen nicht nur in Umfangsrichtung eine Steigung auf, sondern sind auch in radialer Richtung, das heißt von außen nach innen betrachtet schräg ausgebildet. Somit ist bevorzugterweise die Tiefe einer Windung entlang dessen Breite an einer Umfangsposition unterschiedlich. Dabei ist besonders bevorzugterweise die Schräge derart angeordnet, dass eine Windung zum Inneren hin eine größere Tiefe aufweist im Vergleich zu deren äußeren Rand. Auch sind die einzelnen Windungen bevorzugterweise breiter als die darin angeordneten Auflagemittel. Ganz besonders bevorzugterweise sind die einzelnen Windungen mindestens doppelt so breit wie das jeweilige korrespondierende Auflagemittel. Dadurch können die Auflagemittel innerhalb der Windungen in Radialrichtung verschoben und somit die einzelnen Teile, das Unterteil, das Mittelteil und das Oberteil, relativ zueinander verkantet beziehungsweise geneigt werden. Dadurch kann in einfacher Weise die Neigung des Stelzlagers beziehungsweise die Neigung zwischen Untergrund und Bodenbelag verändert und angepasst werden.

Ferner ist bevorzugterweise vorgesehen, dass das Stelzlager mindestens ein am Unterteil angeordnetes Ausgleichsmittel zum Ausgleich einer Neigung aufweist, wobei das Ausgleichsmittel zumindest bereichsweise einen gebogenen Abschnitt aufweist und mit diesem gebogenen Abschnitt am Mittelteil anliegt. Besonders bevorzugterweise ist das Ausgleichsmittel im gebogenen Abschnitt paraboloidförmig. Mit dem gebogenen Abschnitt wird das Ausgleichsmittel des Unterteils gegen das Mittelteil gedrückt. Zum Ausgleich einer Neigung des Untergrundes zur Ebene des Bodenbelags kann bei Belastung des Stelzlagers die Differenz zwischen Untergrund und der Ebene des Bodenbelages automatisch eingestellt werden. Hierzu kann beispielsweise ein maximaler Neigungswinkel zwischen 3° und 2°, ganz besonders bevorzugterweise zwischen 3° und 3,5°, beispielsweise 3,2°, vorgesehen sein. Auch sind bevorzugterweise mindestens zwei in einem Winkel zueinander angeordnete Ausgleichsmittel mit jeweils gebogenem Abschnitt am Unterteil angeordnet, wobei beide Ausgleichsmittel am Mittelteil anliegen beziehungsweise gegen das Mittelteil bei Belastung angedrückt werden.

Analog zum Unterteil weist bevorzugterweise auch das Oberteil mindestens ein Ausgleichsmittel zum Ausgleich einer Neigung auf, wobei auch hier das Ausgleichsmittel zumindest bereichsweise einen gebogenen Abschnitt aufweist und mit diesem gebogenen Abschnitt am Mittelteil anliegt. Das Ausgleichsmittel des Oberteils kann analog zum Ausgleichsmittel des Unterteils ausgebildet sein. Somit ist ganz besonders bevorzugterweise vorgesehen, dass zum Ausgleich einer Neigung zwischen Untergrund und der Ebene des Bodenbelages bei Belastung des Stelzlagers das Mittelteil dadurch in deren Neigung verändert wird, indem sowohl mit den gebogen ausgebildeten Ausgleichsmitteln des Oberteils sowie auch mit den gebogen ausgebildeten Ausgleichsmitteln des Unterteils gegen das Mittelteil gedrückt wird.

Das Stelzlager weist bevorzugterweise mindestens ein Distanzmittel zur Wandanlage oder zur Aufnahme einer Stufenblende an einem Stufenabsatz auf, wobei das Distanzmittel in einer von ein bis zwei Ausnehmungen in einer Oberseite des Oberteils einsetzbar ist oder eingesetzt ist. Beispielsweise kann das Distanzmittel seitlich am Stelzlager angeordnet sein und dort verbleiben, falls dieses bei dem jeweiligen Stelzlager nicht benötigt wird. Wird das Stelzlager im Bereich einer Wand oder einer Stufe eingesetzt, kann das jeweilige Distanzmittel abgetrennt werden und in die Ausnehmung im Oberteil eingesetzt beziehungsweise hineingeschoben werden. Bevorzugterweise erstreckt sich diese Ausnehmung in radialer Richtung auf der Oberseite des Oberteils. Besonders bevorzugterweise sind zwei in einem rechten Winkel zueinander angeordnete Ausnehmungen im Oberteil angeordnet. Somit können bis zu zwei Distanzmittel in einem rechten Winkel zueinander angeordnet werden. Ein derartig bevorzugterweise ausgebildetes Stelzlager kann beispielsweise für den normalen Einsatz zwischen vier plattenförmigen Bodenbelagelementen sowie aber auch im Bereich von Wänden oder Stufen oder an Ecken verwendet werden.

Auch ist bevorzugterweise vorgesehen, dass das Distanzmittel einen im Wesentlichen T-förmigen Querschnitt aufweist und in zwei unterschiedlichen Positionen in die Ausnehmung einsetzbar ist, wobei das Distanzmittel in einer der beiden Positionen ein nach oben abstehendes Positioniermittel zur Positionierung und Ausrichtung der Bodenbelagelemente aufweist. Das Positioniermittel kann dabei als Fugenkreuz dienen. In der Anordnung ohne Positioniermittel kann das Distanzmittel als Aufnahme einer Stufenblende oder Ecke einer Stufenblende dienen.

Das Stelzlager weist ferner bevorzugterweise vier von einer Oberseite des Oberteils abstehende Positioniermittel zur Positionierung und Ausrichtung der Bodenbelagelemente auf, wobei die Positioniermittel ein Fugenkreuz ausbilden und einzeln einklappbar und/oder wegklappbar ausgebildet sind. Die vier Positioniermittel sind dabei im Zentrum des Oberteils und gleichmäßig um die Höhenachse des Stelzlagers verteilt angeordnet. Die einzelnen Positioniermittel können beispielsweise als im Wesentlichen senkrecht nach oben abstehende Stege ausgebildet sein. Wird ein Bodenbelagelement auf ein Positioniermittel aufgelegt, wird dieses nach unten oder innen weggeklappt beziehungsweise eingeklappt. Dies dient insbesondere bei längeren Bodenbelagelementen zur Auflage einer Kante anstatt einer Ecke oder auch zur Unterstützung unter einem einzigen größeren Bodenbelagelement, wobei dann alle vier Positioniermittel eingeklappt beziehungsweise weggeklappt werden. Dadurch ist das Stelzlager noch flexibler und für jede mögliche Art und Kombination von Bodenbelagelementen einsetzbar.

Des Weiteren sind das Unterteil und/oder das Mittelteil und/oder das Oberteil bevorzugterweise aus einem glasfaserverstärkten Kunststoff ausgebildet. Dadurch ist das Stelzlager besonders stabil und tragfähig, weist aber auch ein sehr geringes Eigengewicht auf. Ganz besonders bevorzugterweise ist das ganze Stelzlager aus demselben Material ausgebildet. Durch einen Monomaterialaufbau ist ein besonders einfaches Recycling möglich.

Um noch größere Höhenunterschiede beziehungsweise Unebenheiten des Untergrundes auszugleichen, ist das Stelzlager bevorzugterweise stapelbar beziehungsweise aufeinander steckbar ausgebildet. Somit können mehrere vorbeschriebene Stelzlager aufeinander gesteckt werden. Bei zwei aufeinander gesteckten Stelzlagern kann ein doppelt so großer Höhenausgleich erzielt werden. Zur Fixierung beziehungsweise Verbindung einzelner aufeinander gestreckter Stelzlager können die Positioniermittel dienen. Die Unterseite beziehungsweise das Unterteil des Stelzlagers kann zur Aufnahme der Positioniermittel eines anderen Stelzlagers ausgebildet sein, wobei beim Aufeinanderstecken die Positioniermittel eines Stelzlagers in das Unterteil des anderen Stelzlagers einrasten.

### Kurze Beschreibung der Zeichnungen

Die Erfindung wird nun in Bezug auf die begleitenden Zeichnungen anhand besonders bevorzugter Ausführungsformen beispielhaft erläutert.

Es zeigen schematisch:
- Figur 1:: eine perspektivische Ansicht eines Stelzlagers,
- Figur 2:: eine perspektivische Ansicht einer Schnittdarstellung durch ein Stelzlager,
- Figuren 3a und 3b:: Ober- und Unterseite des Oberteils eines Stelzlagers,
- Figuren 4a und 4b:: Ober- und Unterseite des Mittelteils eines Stelzlagers,
- Figuren 5a und 5b:: Ober- und Unterseite des Unterteils eines Stelzlagers,
- Figur 6:: Querschnitt durch ein Stelzlager in maximaler Höhe,
- Figur 7:: eine perspektivische Ansicht eines Stelzlagers mit eingesetztem Distanzmittel, und
- Figur 8:: eine perspektivische Ansicht einer Schnittdarstellung von zwei aufeinander gesteckten Stelzlagern.

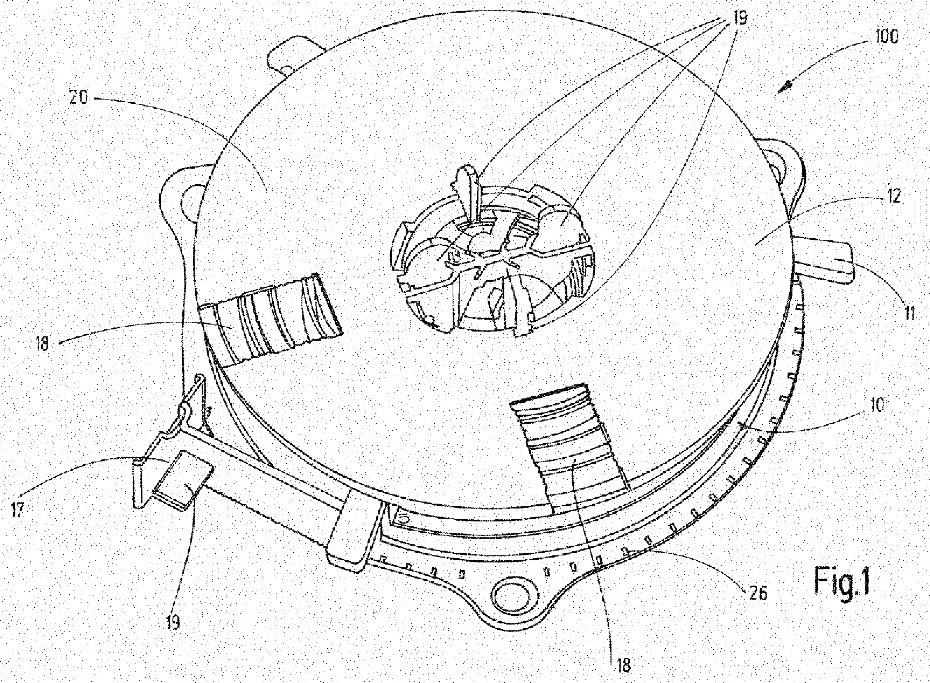

In Figur 1 ist eine perspektivische Ansicht eines höhenverstellbaren Stelzlagers 100 gezeigt. Das Stelzlager 100 weist ein Unterteil 10, ein auf das Unterteil 10 aufgestecktes Mittelteil 11 und ein auf das Mittelteil 11 aufgestecktes Oberteil 12 auf. Von der Oberseite 20 des Oberteils 12 stehen vier zu einem Fugenkreuz angeordnete Positioniermittel 19 nach oben ab. Die Positioniermittel 19 dienen zum Ausrichten von Bodenbelagelementen 210 (in den Figuren der besseren Übersicht halber nicht dargestellt). Die Positioniermittel 19 sind einzeln einklappbar beziehungsweise nach unten klappbar, wodurch unterschiedlichste Konfigurationen für das Stelzlager 100 bereitgestellt werden können.

Das Mittelteil 11 ist drehbar gelagert. Unterteil 10 und Oberteil 12 sind dagegen zueinander drehgesichert angeordnet. Durch Drehen des Mittelteils 11 wird die Höhe des Stelzlagers 100 verändert. Die eingestellte Höhe kann an einer umlaufend angeordneten Skala 26 abgelesen werden. Dabei kann das Mittelteil 11 maximal um 300° gedreht werden, was die größtmögliche Höhenveränderung von circa 30mm bewirkt. Das Unterteil 10, Mittelteil 11 und Oberteil 12 sind dabei derart ausgebildet und zueinander angeordnet, dass beim Drehen des Mittelteils 11 ein erster Abstand zwischen dem Unterteil 10 und dem Mittelteil 11 sowie aber auch gleichzeitig ein zweiter Abstand zwischen dem Mittelteil 11 und dem Oberteil 12 verändert wird.

Seitlich ist ein Distanzmittel 17 am Stelzlager 100 angeordnet. Das Distanzmittel 17 kann bei Bedarf vom Stelzlager 100 abgetrennt und in eine Ausnehmung 18 auf der Oberseite 20 des Oberteils 12 hineingeschoben werden. Das Distanzmittel 17 ist im Wesentlichen T-förmig ausgebildet und kann in zwei verschiedenen Positionen in die Ausnehmung 18 eingesetzt werden. Hierfür muss das Distanzmittel 17 um 180° gedreht beziehungsweise gewendet werden. In einer der beiden Positionen steht vom Distanzmittel 17 ein weiteres Positioniermittel 19 zum Ausrichten beziehungsweise Positionieren von Bodenbelagelementen 210 nach oben ab.

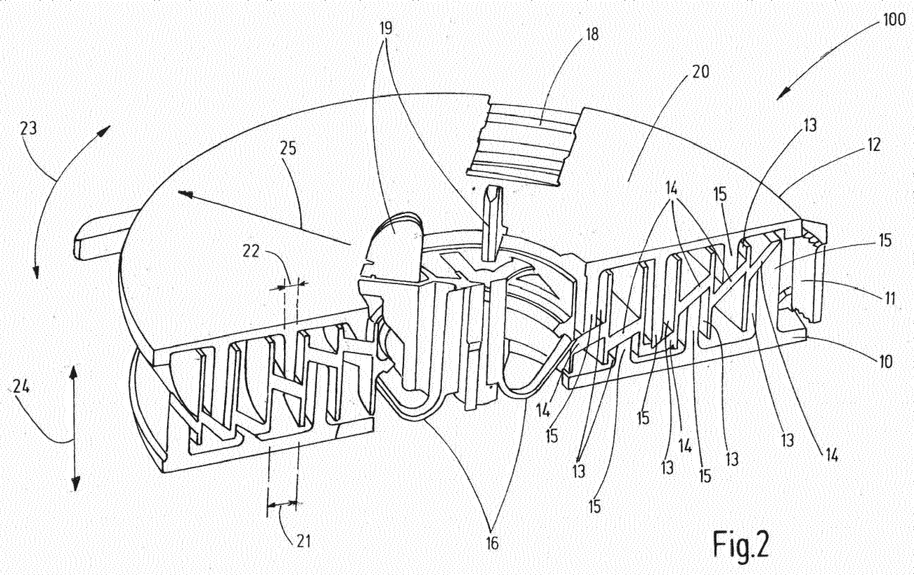

In Figur 2 ist ein Querschnitt durch das höhenverstellbare Stelzlager 100 aus Figur 1 in niedrigster Position gezeigt. Daraus geht insbesondere die Wirkverbindung der einzelnen Teile 10, 11 und 12 zueinander hervor. Das Mittelteil 11 trägt die Lagergeometrie der gewindeartigen Anordnung mit den konzentrisch zueinander angeordneten Windungen 13. Dabei ist jeweils abwechselnd eine Windung 13 zum Unterteil 10 hin ausgerichtet und die nächste Windung 13 zum Oberteil 12 hin ausgerichtet. Die Windungen 13 weisen jeweils Steiggänge auf. Diese werden durch den jeweiligen Bodenabschnitt 14 einer Windung 13 ausgebildet. Hierfür weist jeder Bodenabschnitt 14 in Umfangsrichtung eine lineare oder nicht lineare Steigung auf.

Sowohl das Unterteil 10 sowie auch das Oberteil 12 weisen jeweils drei konzentrisch zueinander angeordnete Auflagemittel 15 auf. Jedes Auflagemittel 15 ist dabei in einer korrespondierenden Windung 13 des Mittelteils 11 eingesetzt und liegt zumindest bereichsweise am jeweiligen Bodenabschnitt 14 der Windung 13 auf.

Beim Verdrehen des Mittelteils 11 gleitet der jeweilige Bodenabschnitt 14 der Windungen 13 an den Auflagemitteln 15 des Unterteils 10 und des Oberteils 12 entlang. Dabei wird gleichzeitig der Abstand zwischen Mittelteil 11 und Unterteil 10 sowie auch der Abstand zwischen Mittelteil 11 und Oberteil 12 verändert.

Die Bodenabschnitte 14 weisen nicht nur eine umfänglich angeordnete Steigung auf, sondern sind in radialer Richtung beziehungsweise von außen nach innen hin schräg gestellt beziehungsweise in Radialrichtung 25 hin ansteigend geneigt. Des Weiteren weisen die einzelnen Windungen 13 eine Breite 21 auf, welche mehr als doppelt so breit ist wie die Breite 22 eines korrespondierenden Auflagemittels 15. Dies ermöglicht ein einfaches Neigen der einzelnen Teile 10, 11, 12 zueinander. Dabei stellt sich die Neigung je nach Belastung und Differenz zwischen Untergrund und der Ebene des Bodenbelages 200 (der besseren Übersicht halber in den Figuren nicht dargestellt) selbst ein.

Zur Einstellung der Neigung weist sowohl das Unterteil 10 sowie auch das Oberteil 12 Ausgleichsmittel 16 auf. Diese Ausgleichsmittel 16 sind abschnittsweise gebogen beziehungsweise paraboloidförmig ausgebildet. Die Ausgleichsmittel 16 des Unterteils 10 drücken dabei gegen einen Abschnitt des Mittelteils 11. Die Ausgleichsmittel 16 des Oberteils 12 drücken ebenfalls gegen einen gegenüberliegenden Abschnitt am Mittelteil 11. Im Mittelteil 11 abwechselnd von oben und unten nebeneinander anliegend bilden die Ausgleichsteile 16 gleichsam die Verdrehsicherung von Unterteil 10 zu Oberteil 12.

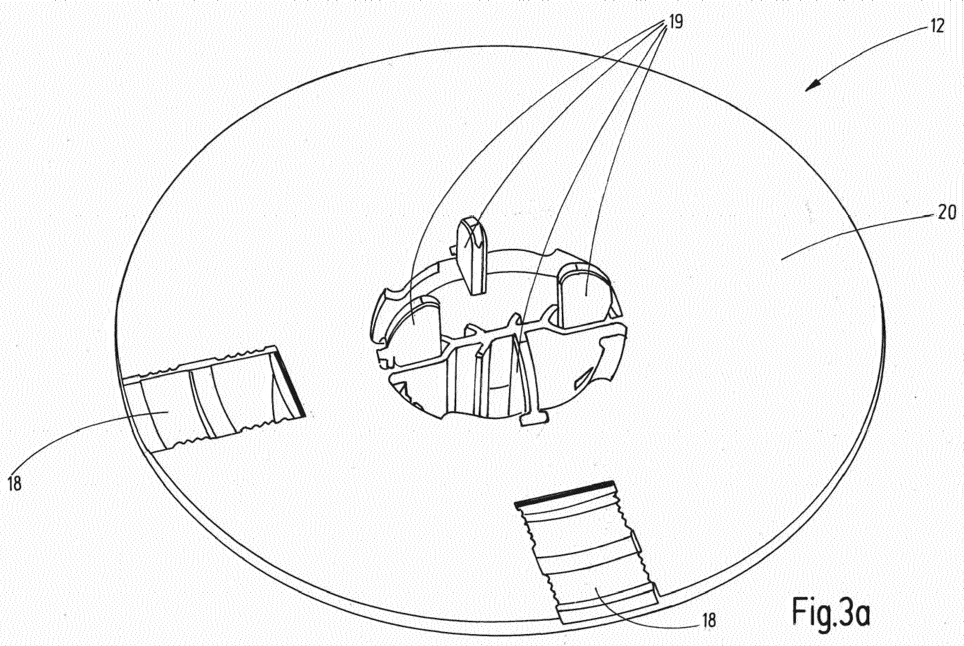

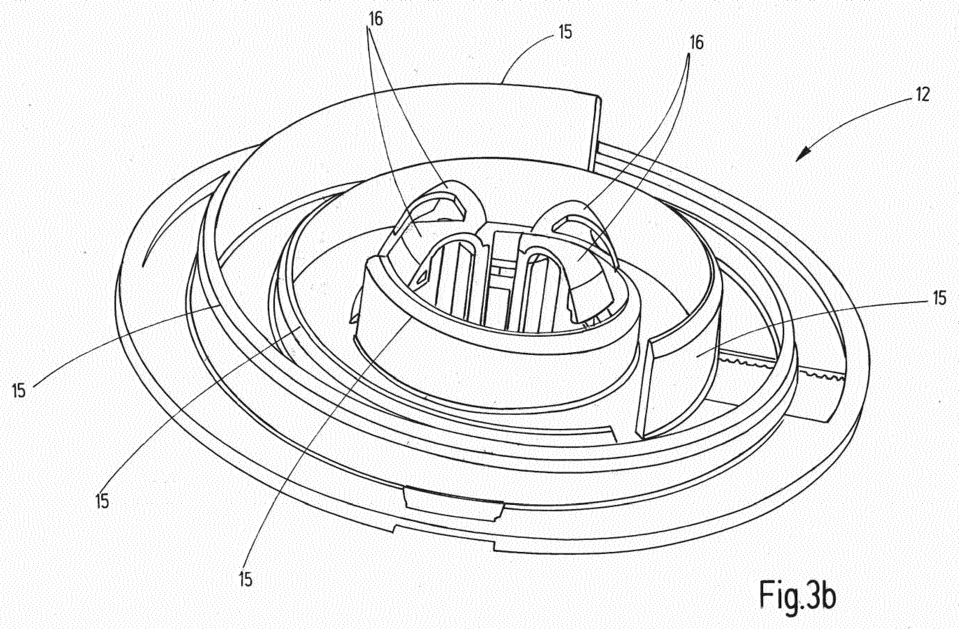

In den Figuren 3a und 3b sind Oberseite 20 und Unterseite des Oberteils 12 dargestellt. Insbesondere gehen aus Figur 3b die Ausbildung der drei konzentrisch zueinander angeordneten Auflagemittel des Oberteils 12 sowie auch die paraboloidförmigen Ausgleichsmittel 16 deutlich hervor.

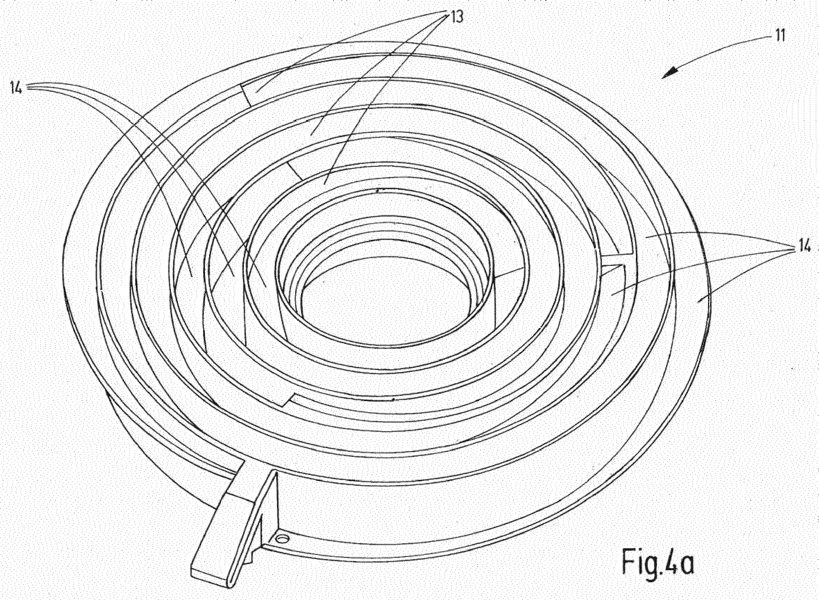

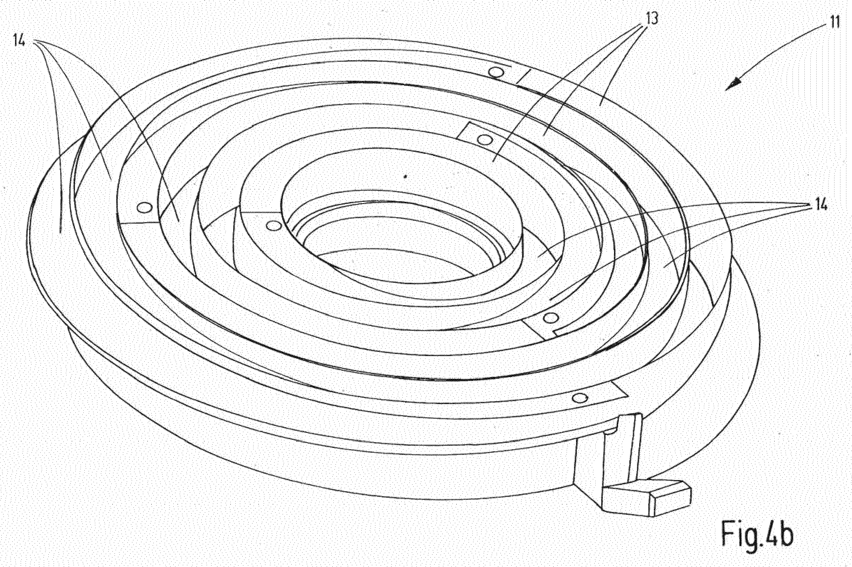

In den Figuren 4a und 4b sind Oberseite und Unterseite des Mittelteils 11 mit den zu beiden Seiten konzentrisch zueinander angeordneten Windungen 13 im Detail dargestellt.

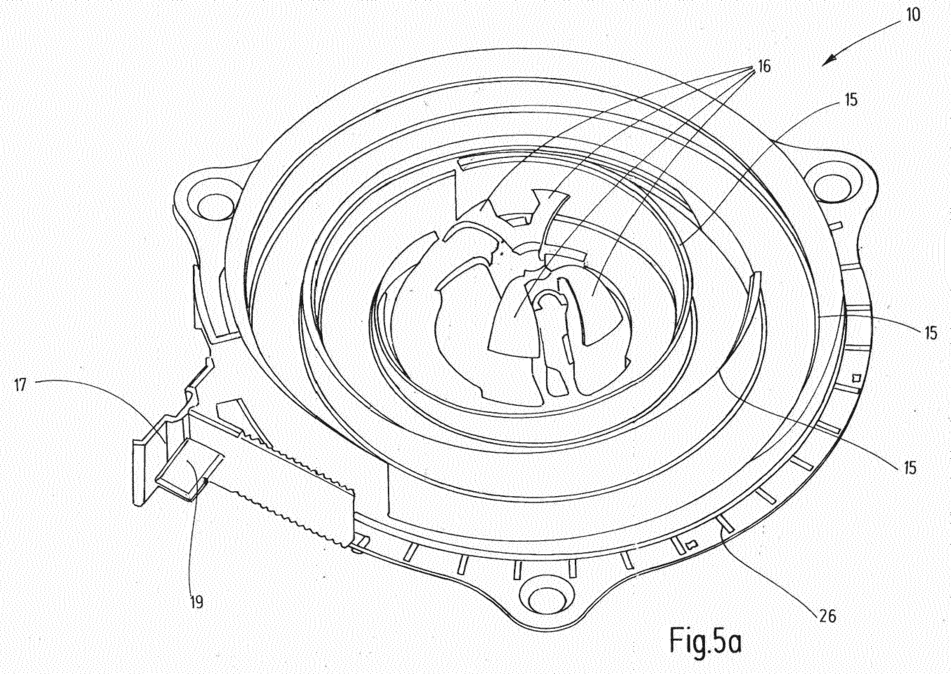

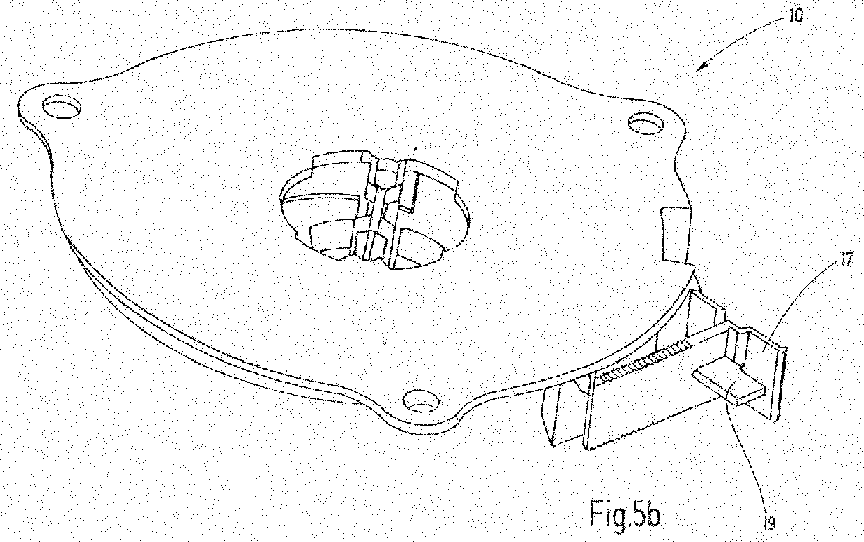

Figuren 5a und 5b zeigen Ober- und Unterseite des Unterteils 10. Insbesondere aus Figur 5a gehen die drei konzentrisch zueinander angeordneten Auflagemittel 15 und die paraboloidförmig ausgebildeten Ausgleichsmittel 16 hervor.

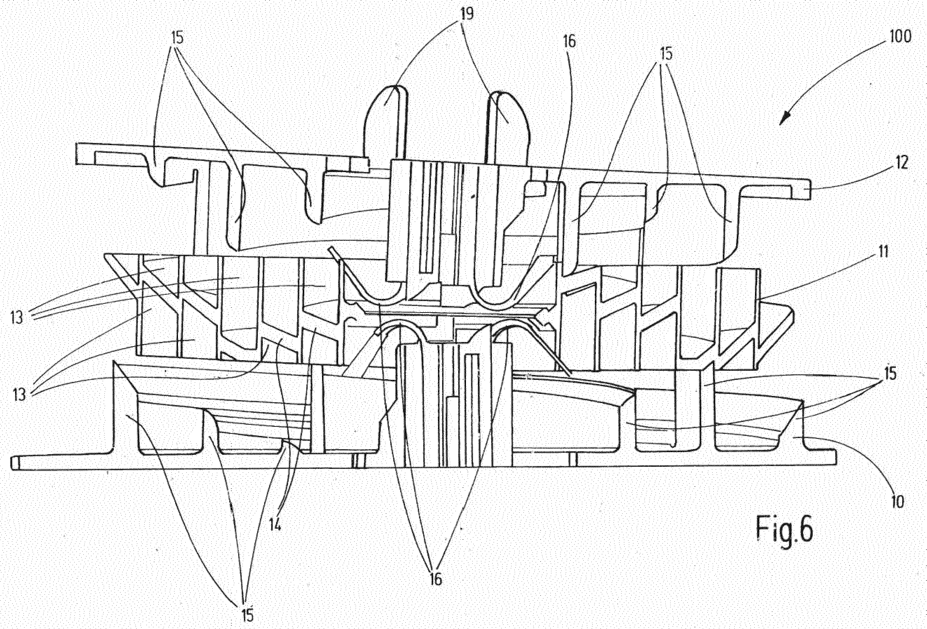

In Figur 6 ist ein Querschnitt durch das höhenverstellbare Stelzlager 100 nochmals im Detail in seiner maximalen Position dargestellt, wobei die Neigung des Unterteils 10 beziehungsweise des Untergrundes zur Ebene des Bodenbelages 200 beziehungsweise des Oberteils 12 verändert ist.

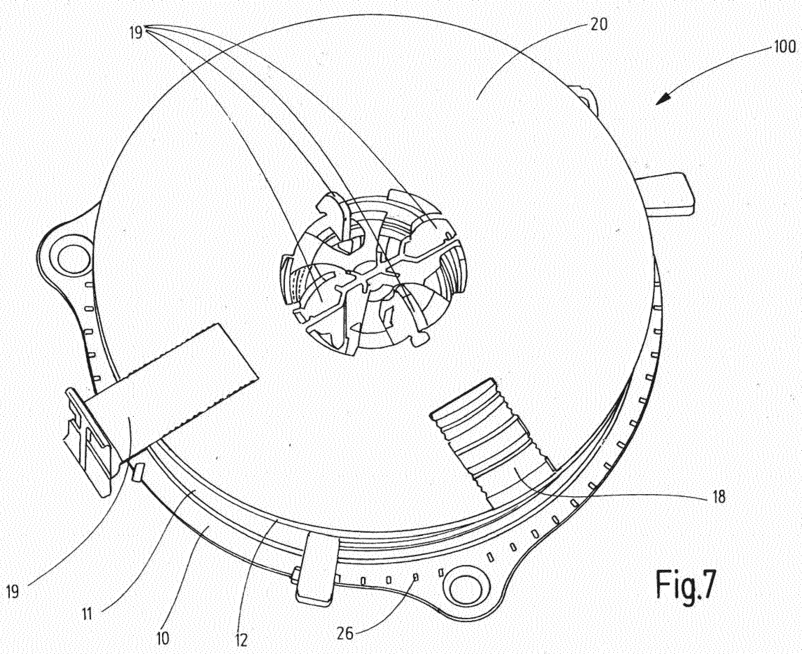

In Figur 7 ist nochmals eine perspektivische Ansicht des höhenverstellbaren Stelzlagers 100 gezeigt, wobei das Positioniermittel 19 zur Anlage an eine Wand oder zu einer Stufenblende (in Figur 7 der besseren Übersicht halber nicht dargestellt) in eine der beiden Ausnehmungen 18 in der Oberseite 20 des Oberteils 12 eingesetzt ist. Dabei ist das Distanzmittel 17 in der Position eingesetzt, in welcher das zusätzliche Positioniermittel 19 nicht nach oben absteht.

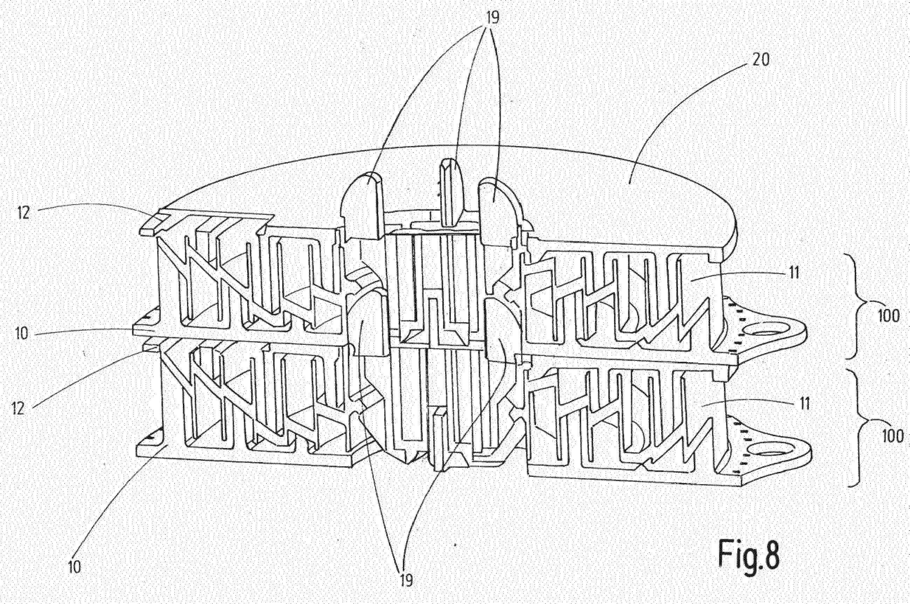

Figur 8 zeigt eine perspektivische Ansicht durch eine Schnittdarstellung von zwei aufeinander gesteckten höhenverstellbaren Stelzlagern 100. Zu erkennen ist, dass die Positioniermittel 19 des Oberteils 12 am unteren Stelzlager 100 in die vorgesehenen Hinterrastungsbereiche im Unterteil 10 des oberen Stelzlagers 100 verrasten und somit eine drehsichere Positionierung der Stelzlager 100 oben und unten zueinander ermöglichen.

### Bezugszeichenliste

- 100: Höhenverstellbares Stelzlager
- 200: Bodenbelag

- 10: Unterteil
- 11: Mittelteil
- 12: Oberteil
- 13: Windung
- 14: Bodenabschnitt einer Windung
- 15: Auflagemittel
- 16: Ausgleichsmittel
- 17: Distanzmittel
- 18: Ausnehmung
- 19: Positioniermittel
- 20: Oberseite des Oberteils

- 21: Breite einer Windung
- 22: Breite eines Auflagemittels
- 23: Umfangsrichtung
- 24: Höhenrichtung
- 25: Radialrichtung
- 26: Skala

- 210: Bodenbelagelement

## Patentansprüche

1. Höhenverstellbares Stelzlager (100) zum Verlegen und zur Lagerung eines Bodenbelags (200) aus mehreren Bodenbelagelementen (210), wobei das Stelzlager (100) mindestens ein Unterteil (10), ein auf das Unterteil (10) aufgestecktes Mittelteil (11) und ein auf das Mittelteil (11) aufgestecktes Oberteil (12) aufweist, wobei das Unterteil (10), das Mittelteil (11) und das Oberteil (12) derart ausgebildet sind, dass durch eine Drehbewegung des Mittelteils (11) eine Höhe des Stelzlagers (100) verändert wird,
**dadurch gekennzeichnet,**
**dass** die Drehbewegung des Mittelteils (11) eine Veränderung eines ersten Abstands zwischen dem Unterteil (10) und dem Mittelteil (11) sowie auch eine Veränderung eines zweiten Abstands zwischen dem Mittelteil (11) und dem Oberteil (12) bewirkt.

2. Höhenverstellbares Stelzlager (100) gemäß Anspruch 1,
**dadurch gekennzeichnet,**
**dass** das Unterteil (10) und das Oberteil (12) zueinander drehgesichert angeordnet sind.

3. Höhenverstellbares Stelzlager (100) gemäß Anspruch 1 oder 2,
**dadurch gekennzeichnet,**
**dass** das Mittelteil (11) mehrere zum Oberteil (12) ausgerichtete und konzentrisch zueinander angeordnete Windungen (13) oder eine spiralförmig angeordnete Windung (13) aufweist, wobei jede Windung (13) einen Bodenabschnitt (14) mit einer linearen oder nichtlinearen Steigung aufweist.

4. Höhenverstellbares Stelzlager (100) gemäß Anspruch 3,
**dadurch gekennzeichnet,**
**dass** das Oberteil (12) mehrere zum Mittelteil (11) ausgerichtete und konzentrisch zueinander angeordnete Auflagemittel (15) oder ein spiralförmig angeordnetes Auflagemittel (15) aufweist, wobei jedes Auflagemittel (15) innerhalb einer Windung (13) angeordnet ist und zumindest bereichsweise auf dem Bodenabschnitt (14) aufliegt.

5. Höhenverstellbares Stelzlager (100) gemäß einem der vorhergehenden Ansprüche,
**dadurch gekennzeichnet,**
**dass** das Mittelteil (11) mehrere zum Unterteil (10) ausgerichtete und konzentrisch zueinander angeordnete Windungen (13) oder eine spiralförmig angeordnete Windung (13) aufweist, wobei jede Windung (13) einen Bodenabschnitt (14) mit einer linearen oder nichtlinearen Steigung aufweist.

6. Höhenverstellbares Stelzlager (100) gemäß Anspruch 5,
**dadurch gekennzeichnet,**
**dass** das Unterteil (10) mehrere zum Mittelteil (11) ausgerichtete und konzentrisch zueinander angeordnete Auflagemittel (15) oder ein spiralförmig angeordnetes Auflagemittel (15) aufweist, wobei jedes Auflagemittel (15) innerhalb einer Windung (13) angeordnet ist und zumindest bereichsweise auf dem Bodenabschnitt (14) aufliegt.

7. Höhenverstellbares Stelzlager (100) gemäß einem der Ansprüche 3 oder 5,
**dadurch gekennzeichnet,**
**dass** der Bodenabschnitt (14) in radialer Richtung (25) von innen nach außen hin ansteigend schräg angeordnet ist.

8. Höhenverstellbares Stelzlager (100) gemäß einem der vorhergehenden Ansprüche,
**dadurch gekennzeichnet,**
**dass** das Stelzlager (100) mindestens ein am Unterteil (10) angeordnetes Ausgleichsmittel (16) zum Ausgleich einer Neigung aufweist, wobei das Ausgleichsmittel (16) zumindest bereichsweise einen gebogenen Abschnitt aufweist und mit diesem gebogenen Abschnitt am Mittelteil (11) anliegt.

9. Höhenverstellbares Stelzlager (100) gemäß einem der vorhergehenden Ansprüche,
**dadurch gekennzeichnet,**
**dass** das Stelzlager (100) mindestens ein am Oberteil (12) angeordnetes Ausgleichsmittel (16) zum Ausgleich einer Neigung aufweist, wobei das Ausgleichsmittel (16) zumindest bereichsweise einen gebogenen Abschnitt aufweist und mit diesem gebogenen Abschnitt am Mittelteil (11) anliegt.

10. Höhenverstellbares Stelzlager (100) gemäß einem der vorhergehenden Ansprüche,
**dadurch gekennzeichnet,**
**dass** das Stelzlager (100) mindestens ein Distanzmittel (17) zur Wandanlage oder als Aufnahme einer Stufenblende an einem Stufenabsatz aufweist, wobei das Distanzmittel (17) in eine Ausnehmung (18) in einer Oberseite des Oberteils (12) einsetzbar ist oder eingesetzt ist.

11. Höhenverstellbares Stelzlager (100) gemäß Anspruch 10,
**dadurch gekennzeichnet,**
**dass** das Distanzmittel (17) einen im Wesentlichen T-förmigen Querschnitt aufweist und in zwei unterschiedlichen Positionen in die Ausnehmung (18) einsetzbar ist, wobei das Distanzmittel (17) in einer der Positionen ein nach oben abstehendes Positioniermittel (19) in radialer Richtung (25) in einem bestimmten Einstellbereich verschiebbar zur Positionierung und Ausrichtung der Bodenbelagelemente (210) aufweist.

12. Höhenverstellbares Stelzlager (100) gemäß einem der vorhergehenden Ansprüche,
**dadurch gekennzeichnet,**
**dass** das Unterteil (10) und/oder das Mittelteil (11) und/oder das Oberteil (12) aus einem glasfaserverstärktem Kunststoff ausgebildet sind.

13. Höhenverstellbares Stelzlager (100) gemäß einem der vorhergehenden Ansprüche,
**dadurch gekennzeichnet,**
**dass** das Stelzlager (100) vier von einer Oberseite (20) des Oberteils (12) abstehende Positioniermittel (19) zur Positionierung und Ausrichtung der Bodenbelagelemente (210) aufweist, wobei die Positioniermittel (19) ein Fugenkreuz ausbilden und einzeln einklappbar und/oder wegklappbar ausgebildet sind.

14. Höhenverstellbares Stelzlager (100) gemäß einem der vorhergehenden Ansprüche,
**dadurch gekennzeichnet,**
**dass** das Stelzlager (100) auf ein weiteres höhenverstellbares Stelzlager (100) nach einem der vorhergehenden Ansprüche aufsteckbar ist.
